# EUROPÄISCHE PATENTSCHRIFT

(11) **EP 1 857 313 B1**
(45) Veröffentlichungstag und Bekanntmachung des Hinweises auf die Patenterteilung: **15.07.2009**
(21) Anmeldenummer: 07009760.5
(22) Anmeldetag: 16.05.2007
(51) Int. Cl.: B60J 7/22, B60J 7/19, E05B 53/00

(54) **Schutzeinrichtung für Kraftfahrzeuge**
Protective device for vehicles
Dispositif de protection pour automobile

(30) Priorität: 19.05.2006 DE 102006024641
(43) Veröffentlichungstag der Anmeldung: 21.11.2007
(73) Patentinhaber: SCAMBIA INDUSTRIAL DEVELOPMENTS AKTIENGESELLSCHAFT, 9494 Schaan (LI)
(72) Erfinder: Erb, Daniel, 71634 Ludwigsburg (DE); Wiemer, Jörn, 75428 Illingen (DE); Neumann, Peter, 71720 Oberstenfeld (DE); Riehle, Jörg, 71679 Asperg (DE)
(74) Vertreter: Hoeger, Stellrecht & Partner Patentanwälte

(56) Entgegenhaltungen:
- EP-A- 1 621 386
- EP-A- 1 707 414
- EP-A2- 1 053 900
- DE-A1- 10 102 662
- DE-A1- 10 105 598
- DE-C1- 4 100 240

## Beschreibung

Die Erfindung betrifft eine Schutzeinrichtung für Kraftfahrzeuge nach dem Oberbegriff des Anspruchs 1.

Eine derartige Schutzeinrichtung für Kraftfahrzeuge ist aus der DE 101 02 662 A bekannt.

Bei dieser sind üblicherweise die Fixiereinrichtungen einzeln betätigbar.

Eine Montage oder Demontage eines Schutzelements mit einzeln betätigbaren Fixiereinrichtungen ist jedoch aufwändig und mühsam, zumal das Schutzelement zusätzlich noch in seiner Position an der Kraftfahrzeugkarosserie gehalten werden muss.

Der Erfindung liegt daher die Aufgabe zugrunde, eine Schutzeinrichtung der gattungsgemäßen Art montagefreundlicher zu gestalten.

Diese Aufgabe wird bei einer Schutzeinrichtung der eingangs beschriebenen Art erfindungsgemäß durch die Merkmale des Anspruchs 1 gelöst.

Der Vorteil der erfindungsgemäßen Lösung ist darin zu sehen, dass damit zumindest die Möglichkeit besteht, in einfacher Weise die unwirksame Stellung der Verriegelungselemente zu erreichen und somit mindestens beim Lösen eines derartigen Schutzelements die Handhabung zu vereinfachen.

Die Koppeleinrichtung kann in unterschiedlichster Art und Weise ausgebildet sein. Beispielsweise wäre es denkbar, die Koppeleinrichtung so auszubilden, dass diese nicht nur in der Lage ist, die Verriegelungselemente aktiv von ihrer wirksamen Stellung in ihre unwirksame Stellung zu überführen, sondern auch in der Lage ist, die Verriegelungselemente aktiv von ihrer unwirksamen Stellung in ihre wirksame Stellung zu überführen.

Eine vorteilhafte Alternative sieht vor, dass die Koppeleinrichtung so ausgebildet ist, dass mit dieser eine aktive Einwirkung auf die Verriegelungselemente nur beim Überführen von der wirksamen Stellung in die unwirksame Stellung möglich ist.

Der Vorteil dieser Lösung ist darin zu sehen, dass bei dieser somit die Möglichkeit besteht, die Verriegelungselemente derart freizugeben, dass diese die Möglichkeit haben, unabhängig voneinander von der unwirksamen Stellung in die wirksame Stellung überzugehen.

Die Koppeleinrichtung kann dabei in unterschiedlichster Art und Weise ausgebildet sein. Beispielsweise wäre es denkbar, die Koppeleinrichtung elektrisch auszubilden, das heißt beispielsweise über gleichzeitig ansteuerbare elektrische Antriebe die Funktion der Koppeleinrichtung zu realisieren.

Um eine möglichst kostengünstige Lösung zu erreichen, ist es zweckmäßig, wenn die Koppeleinrichtung ein mechanisches Koppelelement aufweist.

Ein derartiges mechanisches Koppelelement kann in unterschiedlichster Art und Weise ausgebildet sein.

Mit einem mechanischen Koppelelement ist es sowohl möglich, auf die Verriegelungselemente im Sinne einer Bewegung derselben von der wirksamen in die unwirksame Stellung aktiv einzuwirken, oder auch möglich, zusätzlich noch im Sinne einer Bewegung derselben von der unwirksamen in die wirksame Stellung aktiv einzuwirken.

Eine vorteilhafte Lösung sieht vor, dass das Koppelelement ein Zugelement ist.

Ein Zugelement ist zunächst primär nur dafür geeignet, in einer Richtung auf die Verriegelungselemente einzuwirken, beispielsweise beim Bewegen derselben von der wirksamen Stellung in die unwirksame Stellung.

Es ist aber auch denkbar, zwei Zugelemente oder ein Endloszugelement vorzusehen, die über Kreuz wirken und somit sowohl im Sinne eines Überführens der Verriegelungselemente von der wirksamen Stellung in die unwirksame Stellung als auch im Sinne eines Überführens der Verriegelungselemente von der unwirksamen in die wirksame Stellung aktiv einzuwirken.

Unter einer aktiven Einwirkung ist dabei zu verstehen, dass eine zwangsgeführte Bewegung in der jeweiligen Bewegungsrichtung erfolgt, so dass ein Bewegen eines der Verriegelungselemente zwangsläufig zu einer Bewegung des anderen gegenüberliegenden Verriegelungselements führt.

Ein derartiges Zugelement kann in unterschiedlichster Art und Weise ausgebildet sein. Beispielsweise kann hierbei jedes auf Zug belastbare Element, beispielsweise eine Kette eingesetzt werden. Eine besonders einfache Lösung sieht vor, dass das Zugelement ein Zugseil ist.

Ein Betätigen der Verriegelungselemente kann in unterschiedlichster Art und Weise erfolgen.

Beispielsweise wäre es denkbar, zum Betätigen der Verriegelungselemente unmittelbar auf die Koppeleinrichtung einzuwirken.

Eine derartige Einwirkung auf die Koppeleinrichtung, beispielsweise auf ein mechanisches Koppelelement, kann unmittelbar auf dieses durch Drehen oder Umlenken desselben erfolgen.

Ein derartiges Betätigungselement ist vorzugsweise ein handbetätigbares Element, mit welchem entweder eine Einwirkung auf eines der Verriegelungselemente oder eine Einwirkung auf die Koppeleinrichtung möglich ist.

Beim Vorsehen von nur einem Betätigungselement besteht allerdings das Problem, dass dieses ergonomisch ungünstig liegen muss, wenn es von beiden Seiten des Kraftfahrzeugs her zugänglich sein soll, so dass nur eine Anordnung in einem mittigen Bereich der Schutzeinrichtung realisierbar ist.

Aus diesem Grund ist vorzugsweise vorgesehen, dass jeder der Fixiereinrichtungen ein Betätigungselement zugeordnet ist, so dass ergonomisch günstig an jeder der Fixiereinrichtungen und somit an jeder Seite der Schutzeinrichtung ein Betätigungselement zur Verfügung steht.

Ein derartiges Betätigungselement ist vorzugsweise nahe des jeweiligen Verriegelungselements, insbesondere im Gehäuse der jeweiligen Fixiereinrichtung, angeordnet.

Dabei kann das Betätigungselement so ausgebildet sein, dass mit diesem ein Einwirken auf das Verriegelungselement und/oder ein Einwirken auf die Koppeleinrichtung möglich ist.

Eine mechanisch funktional günstige Lösung sieht vor, dass das Betätigungselement auf die Koppeleinrichtung wirkt.

Insbesondere ist es vorteilhaft, wenn das Betätigungselement auf das Zugelement der Koppeleinrichtung im Sinne einer Translation von mit den jeweiligen Verriegelungselementen zusammenwirkenden Bereichen auf das Koppelelement wirkt.

Im einfachsten Fall kann dies derart realisiert sein, dass sich die mit den Verriegelungselementen verbundenen Bereiche bei jedem der Verriegelungselemente im Sinne derselben Bewegung der Verriegelungselemente bewegen, das heißt beispielsweise im Sinne eines Bewegens der Verriegelungselemente von der wirksamen Stellung in die unwirksame Stellung.

Im einfachsten Fall bewirkt ein derartiges Betätigungselement im Fall eines Zugelements als Kopplungselement in einem Abschnitt des Zugelements eine Variation einer Ausdehnung oder Größe einer Umschlingungsschleife.

Hinsichtlich des Festlegens der Betätigungselemente in bestimmten Stellungen wurden bislang keine näheren Angaben gemacht. So sieht ein vorteilhaftes Ausführungsbeispiel vor, dass das Betätigungselement in einer eine unwirksame Stellung der Verriegelungselemente aufrecht erhaltenden Stellung festlegbar ist.

Vorzugsweise ist dabei das Betätigungselement in dieser Stellung verrastbar.

Im einfachsten Fall ist dabei vorgesehen, dass das Betätigungselement ein Rastelement aufweist, welches mit einem stationären Rastelement verrastbar ist.

Das Verrasten des Betätigungselements erfolgt dabei stets so, dass die Verrastung einerseits manuell herbeiführbar, andererseits wieder manuell lösbar ist.

Ein derartiges manuelles Lösen der Verrastung ist in unterschiedlicher Art und Weise realisierbar.

Es besteht die Möglichkeit, die Rastelemente so auszubilden, dass durch Aufbringen eines geeigneten Drehmoments die Rastelemente wieder außer Eingriff bringbar sind, beispielsweise durch Hinwegbewegen des einen Rastelements über das andere Rastelement.

Insbesondere sind in diesem Fall die Flanken, mit welchen die Rastelemente in der verrasteten Stellung aneinander anliegen, entsprechend abzuschrägen.

Alternativ ist es denkbar, die Rastelemente so auszubilden, dass diese sicher verrasten und nicht durch Aufbringen eines Drehmoments in entgegengesetzter Richtung übereinander hinweg bewegbar sind.

In diesem Fall ist ein Element zur Bewegung des einen Rastelements gegenüber dem anderen vorzusehen, so dass durch aktive Einwirkung auf eines der Rastelemente die Rastelemente in einen derartigen Abstand bringbar sind, dass die Rastelemente übereinander hinweg bewegbar sind.

Ist beispielsweise eines der Rastelemente an einem dieses tragenden Körper angeordnet, so ist der gesamte Körper durch aktives Einwirken auf diesen so weit vom jeweils anderen Rastelemente weg bewegbar, dass diese wechselwirkungsfrei übereinander hinweg bewegbar sind.

Vorzugsweise ist in all diesen Fällen der das jeweils bewegbare Rastelement tragende Körper, beispielsweise der Zugseilspannkörper, durch ein federelastisches Element derart beaufschlagt, dass durch das federelastische Element die Rastelemente soweit aufeinander zu bewegt werden, dass die Rastelemente zusammenwirken.

Hinsichtlich der Ausbildung der Verriegelungselemente wurden bislang keine näheren Angaben gemacht.

So sieht ein vorteilhaftes Ausführungsbeispiel vor, dass die Verriegelungselemente durch einen elastischen Kraftspeicher in Richtung ihrer wirksamen Stellung beaufschlagt sind.

Eine derartige Lösung hat den großen Vorteil, dass damit die Verriegelungselemente unabhängig von einer Einwirkung auf diese stets die Tendenz haben, ihre wirksame Stellung einzunehmen und in dieser zu verbleiben.

Dabei ist sichergestellt, dass somit die Verriegelungselemente auch stets die Tendenz haben, die Schutzeinrichtung im Kraftfahrzeug sicher durch Einnahme ihrer wirksamen Stellung festzulegen.

Vorzugsweise ist dabei jedem der Verriegelungselemente ein eigener elastischer Kraftspeicher zugeordnet, so dass jedes der Verriegelungselemente unabhängig vom anderen durch einen derartigen Kraftspeicher beaufschlagt ist.

Um die Bedienung der erfindungsgemäßen Schutzeinrichtung, insbesondere bei der Montage zu vereinfachen, ist vorzugsweise vorgesehen, dass zwischen dem jeweiligen Verriegelungselement und dem diesem zugeordneten Betätigungselement eine unterschiedliche Bewegungsabläufe der Verriegelungselemente bewirkende Bewegungsablaufkopplung vorgesehen ist.

Damit lassen sich beispielsweise die über die Kopplungseinrichtung gekoppelten Verriegelungselemente unterschiedlich schnell und/oder nacheinander bewegen und somit wird die Montage oder Demontage der Schutzeinrichtung für eine Bedienungsperson erleichtert.

Eine derartige Bewegungsablaufkopplung eröffnet beispielsweise die Möglichkeit, den Bewegungsablauf des dem Betätigungselement unmittelbar zugeordneten Verriegelungselements abhängig von der Stellung des Betätigungselements zusätzlich zu beeinflussen.

Vorzugsweise ist die Bewegungsablaufkopplung so ausgebildet, dass beim Einwirken auf ein Betätigungselement im Sinne eines Übergangs der Verriegelungselemente von der unwirksamen Stellung in die wirksame Stellung zunächst das Verriegelungselement der gegenüberliegenden Fixiereinrichtung in die wirksame Stellung übergeht und dann mit Verzögerung das diesem Betätigungselement zugeordnete Verriegelungselement.

Vorzugsweise ist die Bewegungsablaufkopplung als Sperreinrichtung ausgebildet, welche zunächst einen Übergang des dem Betätigungselement zugeordneten Verriegelungselements von der unwirksamen Stellung in die wirksame Stellung sperrt und erst dann freigibt, wenn das Betätigungselement aufgrund seiner Stellung zugelassen hat, dass das andere Verriegelungselement in die wirksame Stellung übergegangen ist.

Eine derartige Lösung hat den großen Vorteil, dass sie es einer Bedienungsperson ermöglicht, die Schutzeinrichtung in einfacher Weise zu montieren, nämlich dadurch, dass zunächst das eine Verriegelungselement für eine Fixierung der Schutzeinrichtung an der Karosserie in die wirksame Stellung übergeht und dann nachfolgend das andere Verriegelungselement. Dies ist insbesondere dann günstig, wenn die Schutzeinrichtung in sich nicht vollständig steif ist, und sich bei der Montage deformiert, so dass beide Verriegelungselemente nur schwerlich gleichzeitig mit der Karosserie in Wirkverbindung gebracht werden können.

Hinsichtlich der Ausbildung der Schutzeinrichtung selbst wurden bislang keine näheren Angaben gemacht. So sieht ein vorteilhaftes Ausführungsbeispiel vor, dass die Schutzeinrichtung als eine in einem Fahrzeug montierbare Sonnenschutzeinrichtung ausgebildet.

Eine derartige Windstoppeinrichtung kann in unterschiedlichster Art und Weise ausgebildet sein. Die einfachste Lösung sieht vor, dass die Windstoppeinrichtung ein Windschott aufweist, welches sich über eine Gürtellinie eines Cabriofahrzeugs erhebend an diesem montierbar ist.

Eine andere vorteilhafte Lösung sieht vor, dass die Windstoppeinrichtung eine Abdeckung und ein mit dieser verbundenes Windschott aufweist.

Eine derartige Abdeckung dient beispielsweise dazu, einen hinter einer vorderen Sitzreihe liegenden Fahrgastraum abzudecken.

Vorzugsweise sind dabei die Abdeckung und das Windschott gelenkig miteinander verbunden, so dass das Windschott in verschiedenen Winkeln zur Abdeckung ausgerichtet werden kann.

Um eine derartige Schutzeinrichtung in einfacher Weise verstauen zu können, ist vorzugsweise vorgesehen, dass die Schutzeinrichtung zusammenklappbar ist.

Im einfachsten Fall ist dabei das Windschott auf die Abdeckung klappbar.

In noch vorteilhafteren Fällen sind die Einheit aus Windschott und Abdeckung nochmals zusammenklappbar, beispielsweise um eine zu einer Fahrzeuglängsmittelachse parallele Mittelachse relativ zueinander faltbar.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:

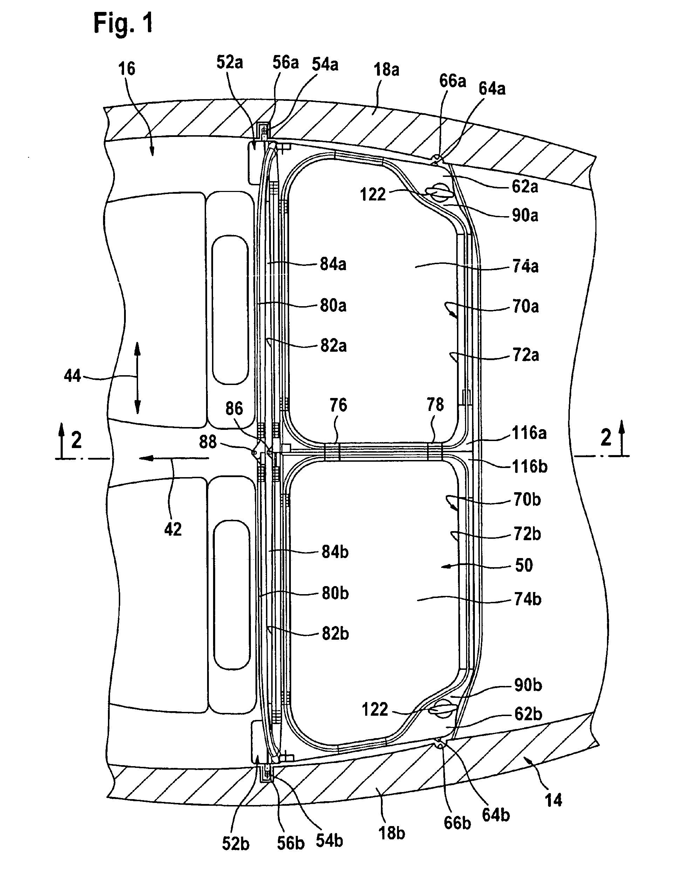

- Fig. 1: eine Ansicht von oben auf ein Cabriofahrzeug mit einem erfindungsgemäßen, als Windstoppeinrichtung ausgebildeten ersten Ausführungsbeispiels einer Schutzeinrichtung;

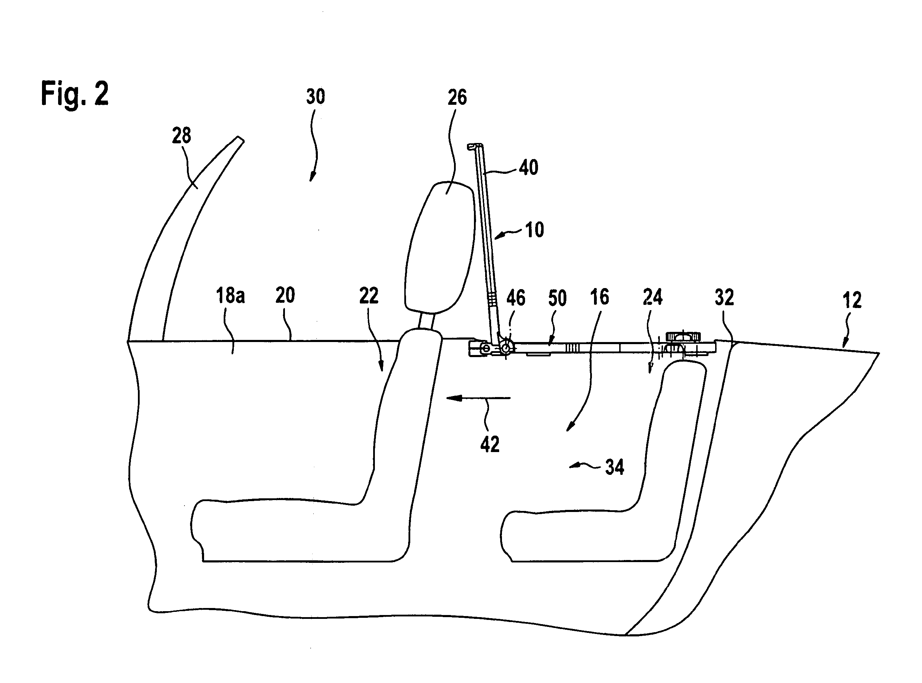

- Fig. 2: einen Schnitt längs Linie 2-2 in Fig. 1;
- Fig. 3: eine ausschnittsweise Darstellung zweier auf gegenüberliegenden Seiten der Schutzeinrichtung angeordneter Fixiereinrichtungen, ausgebildet als Eckstücke einer Abdeckung, in wirksamer Stellung von Verriegelungselementen derselben;
- Fig. 4: eine Darstellung ähnlich Fig. 3 in unwirksamer Stellung von Verriegelungselementen derselben;
- Fig. 5: eine Darstellung eines zweiten Ausführungsbeispiels einer Fixiereinrichtung einer erfindungsgemäßen Schutzeinrichtung betrachtet von unten in wirksamer Stellung des Verriegelungselements;
- Fig. 6: eine Darstellung ähnlich Fig. 5 in unwirksamer Stellung des Verriegelungselements;
- Fig. 7: eine Darstellung der Fixiereinrichtung von oben in wirksamer Stellung des Verriegelungselements;
- Fig. 8: eine Darstellung ähnlich Fig. 7 in unwirksamer Stellung des Verriegelungselements;
- Fig. 9: einen Schnitt längs Linie 9-9 in Ausgangsstellung des Betätigungselements;
- Fig. 10: eine Darstellung ähnlich Fig. 9 vor Beginn einer Wechselwirkung von Rastelementen;

- Fig. 11: eine Darstellung ähnlich Fig. 9 bei unmittelbar vor einer Verrastung stehenden Rastelementen;
- Fig. 12: eine Darstellung ähnlich Fig. 9 der Verrastung der Rastelemente;
- Fig. 13: eine Darstellung ähnlich Fig. 12 eines dritten Ausführungsbeispiels einer Schutzeinrichtung mit Fixiereinrichtungen;
- Fig. 14: eine Darstellung eines Schnittes durch ein Betätigungselement bei dem dritten Ausführungsbeispiel und
- Fig. 15: eine Darstellung ähnlich Fig. 4 eines vierten Ausführungsbeispiels einer Schutzeinrichtung mit Fixiereinrichtungen.

Ein Ausführungsbeispiel eines mit einer erfindungsgemäßen Schutzeinrichtung 10 zu versehenden Cabriofahrzeugs 12 umfasst eine Karosserie 14 mit einem Fahrgastraum 16, der seitlich von Seitenwänden 18a, b umschlossen ist, welche sich bis zu einer Gürtellinie 20 der Karosserie erheben.

In dem Fahrgastraum 16 ist dabei eine vordere Sitzreihe 22 und eine hintere Sitzreihe 24 vorgesehen, wobei die hintere Sitzreihe 24 keine volle Sitzreihe sein muss, sondern auch Notsitze umfassen kann.

Ferner kann bei einer Variante der erfindungsgemäßen Karosserie 14 auch die hintere Sitzreihe 24 fehlen und statt dieser lediglich ein Gepäckaufbewahrungsabteil des Fahrgastraums 16 vorgesehen sein.

Die vordere Sitzreihe 22 ragt zumindest mit Kopfstützen 26 über die Gürtellinie 20 der Karosserie 14 hinaus und zwischen einer Frontscheibeneinheit 28 der Karosserie 14 und den Kopfstützen 26 der vorderen Sitzreihe 22 liegt ein Kopfbereich 30 des Fahrgastraums 16, in welchem bekannterweise durch Luftverwirbelung Zugerscheinungen auftreten.

Aus diesem Grund ist die an dem Cabriofahrzeug montierte Schutzeinrichtung 10 mit einem Windschott 40 versehen, das sich über die Gürtellinie 20 hinter den Kopfstützen 26, im Wesentlichen quer zu der Gürtellinie 20 verlaufend erhebt. Unter einer Ausrichtung des Windschotts 40 quer zur Gürtellinie 20 ist dabei eine Ausrichtung desselben zu verstehen, bei welcher das Windschott 40 mit der Gürtellinie 20 einen Winkel im Bereich von ungefähr 60° bis ungefähr 120° einschließt.

Um den über der hinteren Sitzreihe 24 und unterhalb der Gürtellinie 20 liegenden Bereich 34 des Fahrgastraums 16 abzudecken, ist die Schutzeinrichtung 10 außerdem noch mit einer Abdeckung 50 versehen, die sich in Höhe der Gürtellinie 20 der Karosserie 14 und ungefähr parallel zu dieser von dem Windschott 40 bis zu einem hinteren Endbereich 32 des Fahrgastraums 16 erstreckt.

Bei der erfindungsgemäßen Schutzeinrichtung sind das Windschott 40 und die Abdeckung 50 miteinander zu einer Einheit verbunden, wobei das Windschott 40 vorzugsweise um eine quer zu einer Fahrzeuglängsrichtung 42 und parallel zu einer Querrichtung 44 verlaufende Schwenkachse 46 relativ zur Abdeckung 50 schwenkbar ist, wobei das Windschott 40 um die Schwenkachse 46 in eine zusammengeklappte Stellung verschwenkt werden kann, in welcher das Windschott 40 sich ungefähr parallel zur Abdeckung 50 erstreckt, und in eine aufgeklappte Stellung verschwenkt werden kann, in welcher das Windschott 40 wirksam ist und in dem besagten Winkelbereich von ungefähr 60° bis ungefähr 120° zur Abdeckung 50 steht.

Die gesamte Schutzeinrichtung 10 ist an der Karosserie 14 durch mehrere Fixiereinrichtungen lösbar fixierbar, und zwar durch zwei nahe der Schwenkachse 46 in der Querrichtung 44 auf gegenüberliegenden Seiten angeordnete erste Fixiereinrichtungen 52a, b, welche erste Verriegelungsbolzen 54a, b aufweisen, die in erste, in den Seitenwänden 18a, b der Karosserie 14 vorgesehene Aufnahmen 56a, b hineinbewegbar sind, um die Schutzeinrichtung 10 nahe der Schwenkachse 46 zu fixieren.

Ferner sind an der Abdeckung 50 zweite Fixiereinrichtungen 62 vorgesehen, welche ebenfalls auf in der Querrichtung 44 gegenüberliegenden Seiten der Abdeckung 50 angeordnet sind und zweite Verriegelungselemente 64a, b aufweisen, die mit Aufnahmen 66a, b in den Seitenwänden 18a, b der Karosserie 14 in Eingriff bringbar sind.

Grundsätzlich könnte die Abdeckung 50 als einstückiges Flachteil ausgebildet sein, in dem die Fixiereinrichtungen 52 und 62 auf gegenüberliegenden Seiten angeordnet sind.

Bei einem dargestellten Ausführungsbeispiel ist vorzugsweise die Abdeckung 50 aus zwei Rahmenteilen 70a und 70b ausgebildet, die Öffnungen 72a, 72b umschließen, wobei die Öffnungen 72a, 72b durch ein mittels den Rahmenteilen 70a, b gespannt gehaltenes Flachmaterial 74a, b verschlossen sind. Vorzugsweise ist dabei das Flachmaterial 74a, b als ein begrenzt luftdurchlässiges, jedoch einen Luftstrom verhinderndes Flachmaterial ausgebildet.

Außerdem sind die beiden Rahmenteile 70a, b beispielsweise durch Scharniersysteme 76, 78 miteinander verbunden, so dass die Abdeckung 50 insgesamt so zusammengeklappt werden kann, dass eines der Rahmenteile 70a, b auf dem jeweils anderen der Rahmenteile 70b, a liegt.

In gleicher Weise ist auch das Windschott 40 als Flachkörper ausgebildet, vorzugsweise ist dies jedoch nicht als flacher Körper ausgebildet, sondern ebenfalls aus zwei Rahmenteilen 80a, 80b, die Öffnungen 82a, 82b umschließen, wobei sich in den Öffnungen ebenfalls ein Flachmaterial 84a, 84b erstreckt, welches durch die Rahmenteile 80a, 80b aufgespannt gehalten ist.

Vorzugsweise sind die Rahmenteile 80a, 80b noch durch Scharniere 86, 88 gelenkig miteinander verbunden.

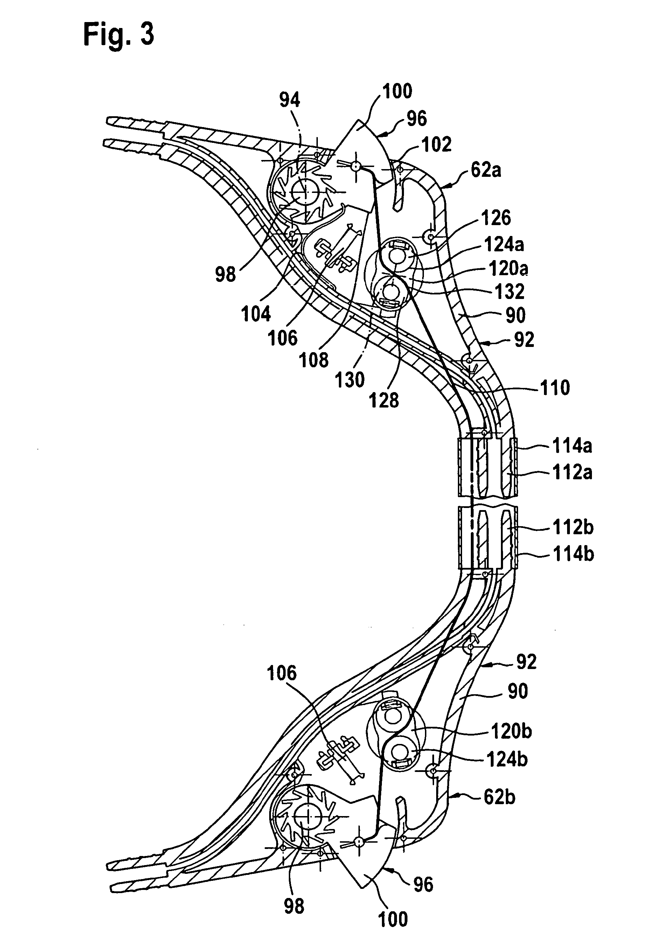

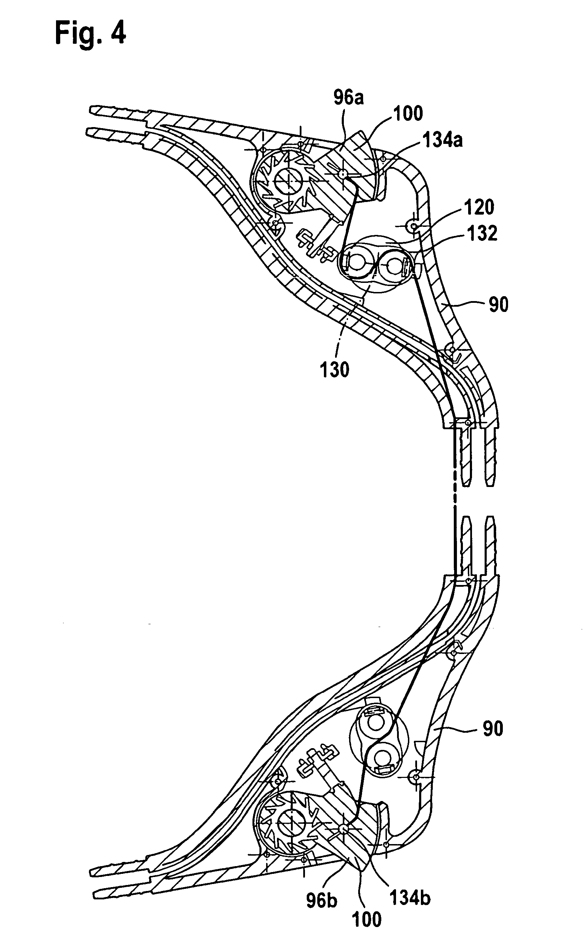

Wie in Fig. 3 und 4 dargestellt, weist jede der zweiten Fixiereinrichtungen 62a, b ein Gehäuse 90 auf, welches beispielsweise in dem dargestellten Fall, von einem Teilbereich des Rahmenteils 70, beispielsweise einem Eckstück 92 des Rahmenteils 70, gebildet wird.

In dem Gehäuse 90 ist um eine Drehachse 94 drehbar ein Schwenkriegel 96 mit einem Lagerkörper 98 drehbar gelagert, wobei der Schwenkriegel 96 neben dem Lagerkörper 98 eine Riegelzunge 100 aufweist, die durch eine Austrittsöffnung 102 des Gehäuses 90 ausschwenkbar ist.

In Fig. 3 ist die Riegelzunge 100 in ihrer ausgefahrenen wirksamen Stellung dargestellt, während die Riegelzunge 100 in Fig. 4 in einer in das Gehäuse 90 eingefahrenen unwirksamen Stellung dargestellt ist.

Zum Verschwenken des Schwenkriegels 96 derart, dass die Riegelzunge 100 in der ausgefahrenen Stellung steht ist dieser noch mit einer Feder 104 beaufschlagt, so dass der Schwenkriegel 96 stets das Bestreben hat, sich in die Stellung zu bewegen, in der die Riegelzunge 100 aus dem Gehäuse 90 vollständig ausgefahren ist.

Zum Festlegen der eingefahrenen Stellung ist, wie in Fig. 4 dargestellt, noch ein Anschlag 106 vorgesehen, gegen welchen die Riegelzunge 100 mit einer Seitenkante 108 in ihrer eingefahrenen Stellung anlegbar ist.

Die Schwenkriegel 96 der beiden auf gegenüberliegenden Seiten der Schutzeinrichtung 10 angeordneten zweiten Fixiereinrichtungen 62a und 62b sind durch ein als Koppelelement einer Koppeleinrichtung ausgebildetes Zugseil 110 miteinander gekoppelt, welches in dem jeweiligen Eckstück 92 aus dem Gehäuse 90 herausgeführt ist und zwar auf einer Seite des Eckstücks 92, an welcher dieses einen Steckzapfen 112a, b aufweist, welcher in ein jeweiliges Rahmenrohr 114a, b der Rahmenteile 70a, b einsteckbar ist, wobei eine derartige Führung des Zugseils 110 aus dem Eckstück 92 heraus erfolgt, so dass dieses neben den Steckzapfen 112 in dem jeweiligen Rahmenrohr 114 verläuft. Das Zugseil tritt dann im Bereich innerer Eckstücke 116a und 116b des jeweiligen Rahmenteils 70a, 70b aus dem jeweiligen Rahmenteil 70a, 70b aus und frei verlaufend von einem der Eckstücke 116a, b in das andere der Eckstücke 116b, a über.

Zusätzlich zu dem jeweiligen Schwenkriegel 96 ist in jedem der Gehäuse 90a, 90b noch ein Betätigungselement 120a, 120b vorgesehen, welches einen manuell betätigbaren Betätigungskopf 122 aufweist, welcher auf einer Oberseite des jeweiligen Gehäuses 90a, 90b zugänglich angeordnet ist.

Ausgehend von dem Betätigungskopf 112 erstreckt sich in dem jeweiligen Gehäuse 90 jeweils ein Zugseilspannkörper 124a, b des jeweiligen Betätigungselements 120a, b, welcher zwei Umlenkkörper 126, 128 aufweist, die beiderseits einer Drehachse 130 des Betätigungselements 120 sitzen und zwischen denen das Zugseil 110 mit einem Abschnitt 132 hindurchverläuft.

Ist das jeweilige Betätigungselement 120 nicht betätigt, so stehen diese Umlenkkörper 126, 128 so, dass das Zugseil110 mit dem Abschnitt 132 in dem jeweiligen Zugseilspannkörper 124 eine geringe ausgeprägte Schiefe dadurch bildet, dass es zwischen den Umlenkkörpern 126, 128 hindurchverläuft.

Soll das zwischen dem Schwenkriegeln 96 verlaufende Zugseil 110 jedoch in seiner,Gesamtlänge zur Ausübung einer Zugkraft verkürzt werden, so erfolgt ein Drehen eines der Betätigungselemente 120 um seine Drehachse 130 und dadurch eine Bildung einer stark ausgeprägten Schleife im Abschnitt 132, dadurch dass durch das Drehen des Zugseilspannkörpers 124 die Umschlingung der Umlenkkörper 126, 128 durch den Abschnitt 132 zunimmt und somit aufgrund der geringeren außerhalb der Schiefe des Abschnitts 132 zur Verfügung stehenden Seillänge zwischen den mit den Schwenkriegeln 96 verbundenen Enden 134a, b eine Zugwirkung auf die Schwenkriegel 96a, b über die Enden 134a, b erfolgt, so dass diese von ihrer wirksamen in ihre unwirksame Stellung übergehen, in welcher die Riegelzungen 100 in das jeweilige Gehäuse 90 eingefahren sind.

Durch die Anschläge 106 erfolgt eine Ausgleich der Zugwirkung auf beide Schwenkriegel 96a, b, so dass beide Schwenkriegel 96a, b durch Betätigung eines der Betätigungselemente 120a, b in die unwirksame Stellung der Riegelzungen 100 überführbar sind.

Diese Stellung der Riegelzungen 100 wird beim ersten Ausführungsbeispiel so lange beibehalten, bis eine manuelle Betätigung des Betätigungskopfes 122 des jeweiligen Betätigungselements 120 endet, so dass das jeweilige Betätigungselement 120 wieder die Möglichkeit hat, sich frei um seine Drehachse 130 zu drehen und sich damit aufgrund der auf das Zugseil 110 durch die Federn 104 und die Schwenkriegel 96 wirkende Zugkraft so weit verdreht, dass die Riegelzungen 100 durch Drehung des jeweiligen Schwenkriegels 96 wieder in ihre ausgefahrene und somit wirksame Stellung, dargestellt in Fig. 3, übergehen. In dieser ist im Bereich des jeweiligen Abschnitts 132 des Zugseils 110 nur eine geringfügige Umschlingung der Umlenkkörper 126, 128 gegeben, die nennenswert kleiner als die Umschlingung bei betätigtem Betätigungselement 120 ist.

Bei der erfindungsgemäßen Schutzeinrichtung besteht somit die Möglichkeit, die Fixierung der Abdeckung 50 durch die zweiten Fixiereinrichtungen 62a und 62b bei Betätigung eines der Betätigungselemente 120 von den Seitenwänden 18a, b der Karosserie dadurch zu lösen, dass beide Riegelzungen 100 aus ihren in den jeweiligen Aufnahmen 66 wirksamen Stellung in eine unwirksame Stellung herausbewegt werden, so dass die gesamte Schutzeinrichtung 10 und insbesondere die Abdeckung 50 um die Verriegelungsbolzen 54 kippbar ist und somit ein Zugang zu dem Bereich 34 des Fahrgastraums 16 möglich ist, der zwischen der vorderen Sitzreihe 22 und der hinteren Sitzreihe 24 liegt.

Damit kann beispielsweise eine Bedienungsperson das Betätigungselement 120 über den Betätigungskopf 122 auf einer Seite der Schutzreinrichtung 10 betätigen, damit die Fixierung der Abdeckung 50 durch die zweiten Fixiereinrichtungen 62a, b lösen und somit die ganze Abdeckung 50 in Richtung der Kopfstützen 26 um die Verriegelungsbolzen 54 verschwenken, um Gepäckstücke oder andere Gegenstände in dem Bereich 34 des Fahrgastraums 16 zwischen der vorderen Sitzreihe 22 und der hinteren Sitzreihe 24 abzulegen oder aus diesem Bereich des Fahrgastraums 16 zu entnehmen.

Alternativ dazu ist es auch denkbar, die Fixiereinrichtungen 52a, b in gleicher Weise auszuführen wie die Fixiereinrichtungen 62a, b, so dass auch diese aufgrund der Kopplung über das Kopplungselement 110 in gleicher Weise lösbar sind.

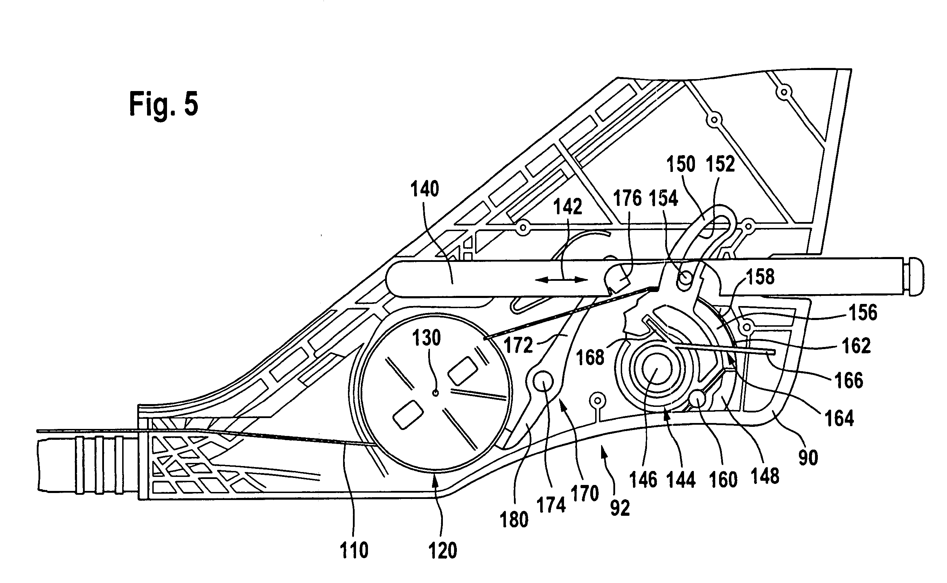

Bei einem zweiten Ausführungsbeispiel, dargestellt in den Figuren 5 bis 8 ist in dem Eckstück 92 kein Schwenkriegel 96 vorgesehen, sondern ein verschieblich gelagerter Riegelbolzen 140, der in einer Verschieberichtung 142 aus dem Gehäuse 90 ausfahrbar oder in dieses einfahrbar ist.

Zum Verschieben des Riegelbolzens 140 ist ein Kulissenantriebselement 144 vorgesehen, welches um eine Schwenkachse 146 in dem Gehäuse 90 schwenkbar gelagert ist und einen Antriebskörper 148 umfasst, von welchem ein Kulissenarm 150 absteht, in welchem eine Kulissenbahn 152 in Form eines Langlochs vorgesehen ist.

In der Kulissenbahn 152 ist ein Bahnfolger 154 geführt, welcher fest mit dem Riegelbolzen 140 verbunden ist.

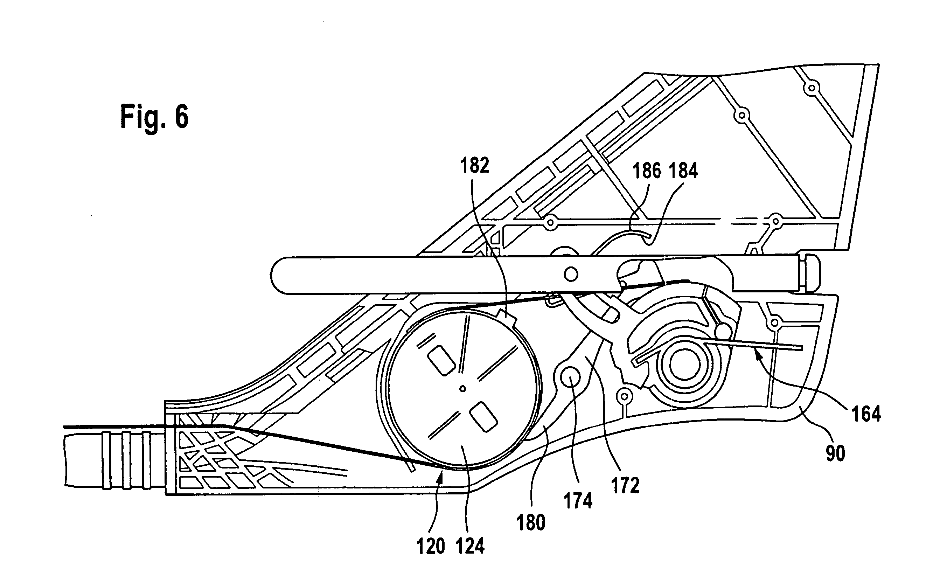

Je nach Drehstellung des Kulissenantriebselements 144 wird der Bahnfolger 154 und somit auch der Riegelbolzen 140 in einer Verschieberichtung 142 verschoben, so dass dadurch der Riegelbolzen 140 aus dem Gehäuse 90 ausfahrbar ist, wie in Fig. 5 dargestellt, oder in dieses einfahrbar ist, wie in Fig. 6 dargestellt.

Zum Verschwenken des Kulissenantriebselements 144 ist dieses mit einem Führungssegment 156 für das Zugseil 110 versehen, welches auf einer Umfangsfläche 158 des Führungssegments 156 aufliegt und an einem Ende 160 mit dem Führungssegment 156 verbunden ist, von welchem ausgehend ein Endabschnitt 162 auf der Umfangsfläche 158 auflegbar ist.

Ein Zug an dem Zugseil 110 bewirkt, dass das Führungssegment 156 um die Schwenkachse 146 schwenkt, so dass dadurch ein Schwenken des gesamten Kulissenantriebselements 144 erfolgt.

Der Zug auf das Zugseil 110 wird durch das jeder Fixiereinrichtung zugeordnete Betätigungselement 120 in gleicher Weise aufgebracht, wie dies im Zusammenhang mit dem ersten Ausführungsbeispiel beschrieben wurde.

Das Kulissenantriebselement 144 wird ferner noch durch eine Schenkelfeder 164, deren einer Schenkel 166 am Gehäuse 90 festgelegt ist und deren anderer Schenkel 168 am Führungssegment 156 festgelegt ist, derart beaufschlagt, dass diese stets den Riegelbolzen 140 in Richtung der aus dem Gehäuse 90 ausgefahrenen wirksamen Stellung beaufschlagt.

Zwischen dem in dem jeweiligen Gehäuse 90 vorgesehenen Betätigungselement 120 und dem Kulissenantriebselement 144 ist ferner eine Bewegungsablaufkopplung 170 vorgesehen, welche in Abhängigkeit von einer Stellung des Betätigungselements 120 eine Drehbewegung des Kulissenantriebselements 144 um die Schwenkachse 146 freigibt oder blockiert.

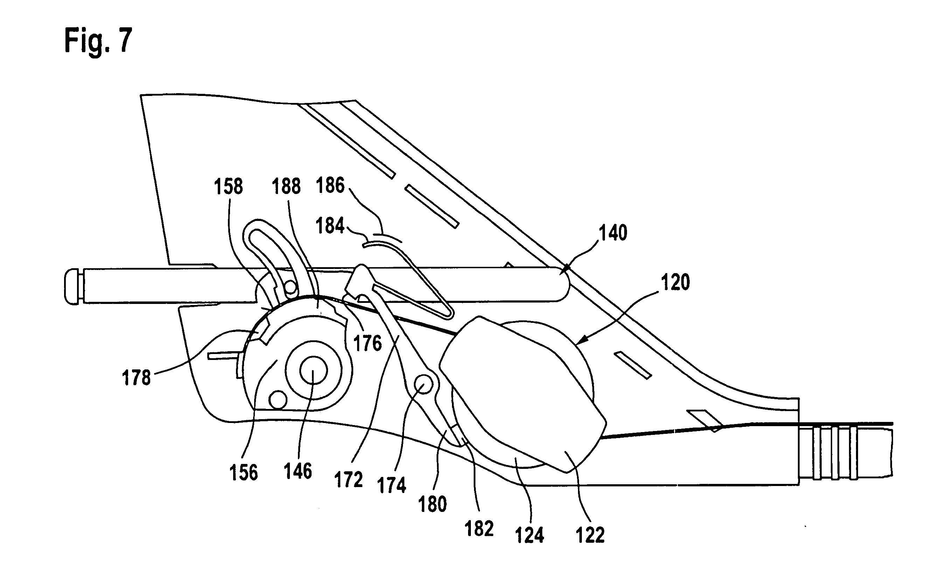

Hierzu umfasst die Bewegungsablaufkopplung 170 einen Sperrhebel 172, welcher um eine Achse 174 schwenkbar ist und an einem Ende eine Rastnase 176 aufweist, welche mit einer Rastausnehmung 178 in dem Führungssegment 156 in Eingriff bringbar ist. Die Rastausnehmung 178 ist derart an dem Führungssegment 156 angeordnet, dass, wie in Fig. 7 dargestellt, die Rastnase 176 dann in die Rastausnehmung 178 einrasten kann, wenn das Führungssegment 156 und somit das Kulissenantriebselement 144 in einer Stellung steht, welche der unwirksamen Stellung des Riegelbolzens 140 entspricht.

Ferner ist der Sperrhebel 172 mit einem Tastarm 180 versehen, welcher mit einem Betätigungsnocken 182 am Zugseilspannkörper 124 zusammenwirkt, um in der nicht betätigten und die wirksame Stellung der Riegelbolzen zulassende Ausgangsstellung des Betätigungselements 120, dargestellt in den Fig. 5 und 7, den Tastarm 180 derart zu beaufschlagen, dass der Sperrhebel 172 die Rastnase 176 außer Eingriff mit der Rastausnehmung 178 bringt und somit das Kulissenantriebselement 144 aufgrund der Wirkung der Schenkelfeder 164 die Möglichkeit hat, sich in eine Stellung zu drehen, in welcher der Riegelbolzen 140 aus dem Gehäuse 90 ausgefahren und somit in seiner wirksamen Stellung steht, wie dies in den Fig. 5 und 7 dargestellt ist.

Um den Sperrhebel 172 stets derart beaufschlagt zu halten, dass die Rastnase 176 die Tendenz hat, in die Rastausnehmung 178 einzugreifen, ist der Sperrhebel 172 mit einem angeformten Federbügel 184 versehen, der an einem Widerlager 186 im Gehäuse 90 abgestützt ist.

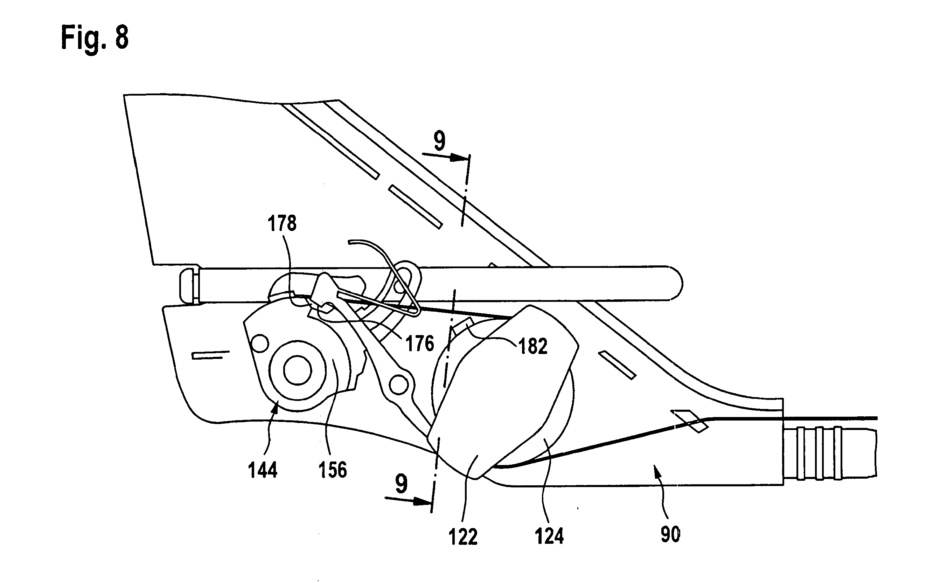

Ferner ist das Führungssegment 156 noch zusätzlich mit einer Führungsbahn 188 versehen, längs welcher die Rastnase 176 so lange gleiten kann, bis sie in die Rastausnehmung 178 eingreift. Ein derartiges Gleiten der Rastnase 176 auf der Führungsbahn 188 erfolgt dann, wenn ausgehend von der in Fig. 5 und 7 dargestellten Ausgangsstellung zunächst ein Drehen des Betätigungselements 120 so weit erfolgt, dass der Betätigungsnocken 182 den Tastarm 180 nicht mehr beaufschlagt und somit die Rastnase 176 sich in Richtung des Führungssegments 156 bewegt. In diesem Fall gleitet dann die Rastnase 176 so lange auf der Führungsbahn 188 bis das Führungssegment 156 so weit um die Schwenkachse 146 geschwenkt ist, dass das Kulissenantriebselement 144 den Riegelbolzen 140 in die in das Gehäuse 90 eingefahrene unwirksame Stellung, dargestellt in den Fig. 6 und 8, bewegt hat. In dieser Stellung steht die Rastausnehmung 178 der Rastnase 176 gegenüber, so dass diese in die Rastausnehmung 178 eingreifen kann und damit jegliche Drehung des Führungssegments 156 und somit des Kulissenantriebselements 144 in Richtung einer wirksamen Stellung des Riegelbolzens 140 so lange verhindert, bis wieder ein Beaufschlagen des Tastarms 180 durch den Betätigungsnocken 182 erfolgt.

Mit dieser Bewegungsablaufkopplung 170 wird nun folgendes erreicht.

Wird zum Hochklappen der Abdeckung 50 eines der Betätigungselemente 120 durch Drehen am Betätigungskopf 122 betätigt, so erfolgt ein Überführen beider Riegelbolzen 140 beider Fixiereinrichtungen 62a, 62b in die in das Gehäuse 90 eingefahrene unwirksame Stellung, nämlich dadurch, dass in dem Zugseilspannkörper 124 die Umschlingung der Umlenkkörper 126 und 128 vergrößert wird, wie dies beim ersten Ausführungsbeispiel bereits beschrieben ist, und somit das Zugseil 110 auf beide Kulissenantriebselemente 144 wirkt und diese um die Schwenkachse 146 so weit dreht, dass aufgrund der Wechselwirkung der Kulissenbahn 152 mit dem Bahnfolger 154 die Riegelbolzen 140 in ihre unwirksame Stellung in das Gehäuse 90 einfahren.

In dieser eingefahrenen Stellung der Riegelbolzen 140 kann die Abdeckung 50 hochgeklappt werden und nach erneutem Herunterklappen der Abdeckung 50 erfolgt dann eine erneute Verriegelung der Abdeckung mit den Fixiereinrichtungen 62a, b, dadurch, dass das Betätigungselement 120, welches von der Bedienungsperson betätigt wurde, die Möglichkeit erhält, von der die unwirksame Stellung der Riegelbolzen 140 aufrechterhaltenden Einzugsstellung in die die wirksame Stellung der Riegelbolzen 140 zulassende Ausgangsstellung zurückzukehren.

Damit wird das Zugseil 110 entspannt und aufgrund der Festlegung der Drehbewegung des in demselben Gehäuse 90 wie das manuell betätigte Betätigungselement 120 angeordneten Kulissenantriebselements 144 durch die Bewegungsablaufkopplung 170, bewirkt ein Entspannen des Zugseils 110, dass sich das Kulissenantriebselement 144 der dem zur manuellen Betätigung herangezogenen Betätigungselement 120 gegenüberliegenden Fixiereinrichtung 62a, b in die wirksame Stellung zurückbewegt, in welcher der Riegelbolzen 140 aus dem Gehäuse 90 ausgefahren ist, so dass dieser in die entsprechende Aufnahme 66a, b in der jeweiligen Seitenwand 18a, b eingreifen kann.

Ein weiteres Zurückbewegen des manuell betätigten Betätigungselements 120 in Richtung seiner Ausgangsstellung bewirkt eine weitere Entspannung des Zugseils 110, die erst dann zu einem Zurückbewegen des in demselben Gehäuse 90 wie das manuell betätigte Betätigungselement 120 angeordneten Kulissenantriebselements 144 in die den entsprechenden Riegelbolzen 140 ausfahrende Stellung führt, wenn der Betätigungsnocken 182 den Tastarm 180 betätigt, somit die Rastnase 176 aus der Rastausnehmung 178 herausbewegt und die Drehbewegung des Kulissenantriebselements 144 freigegeben wird.

Damit hat die Bedienungsperson die Möglichkeit, sequenziell die Riegelbolzen 140 mit den jeweiligen Aufnahmen 66a, b in den Seitenwänden18a, b zu verriegeln, was insbesondere dann vorteilhaft ist, wenn die Abdeckung 50 bei einseitigem Anheben, beispielsweise bei Anheben im Bereich der Seite, auf welcher das Betätigungselement 120 betätigt wird, einseitig durchhängt, so dass die angehobene Seite der Abdeckung 50, insbesondere im Bereich des Gehäuses 90, dessen Betätigungselement 120 betätigt wird, höher über der Gürtellinie 20 der Karosserie 14 steht, als die frei nach unten hängende Seite, beispielsweise im Bereich des gegenüberliegenden Gehäuses 90.

Um nun die Möglichkeit zu eröffnen, das Betätigungselement 120 in der Einzugsstellung zu halten, so dass beide Riegelbolzen 140 in ihrer in das Gehäuse 90 eingefahrenen unwirksamen Stellung stehen, ist der Zugseilspannkörper 124 auf seiner einer oberen Wand 190 des Gehäuses 90 zugewandten Seite mit einer Rastnase 192 versehen, welche über eine Rastnase 194 der Wand 190 hinwegbewegbar ist, und zwar unmittelbar vor Erreichen der Einzugsstellung.

Dabei hat beispielsweise die Rastnase 192 eine Auflaufschräge 196 mit einer geringen Steigung sowie eine Ablaufschräge 198 mit einer größeren Steigung, während die Rastnase 194 beiderseits Schrägen 202 und 204 mit ungefähr gleicher Steigung aufweist.

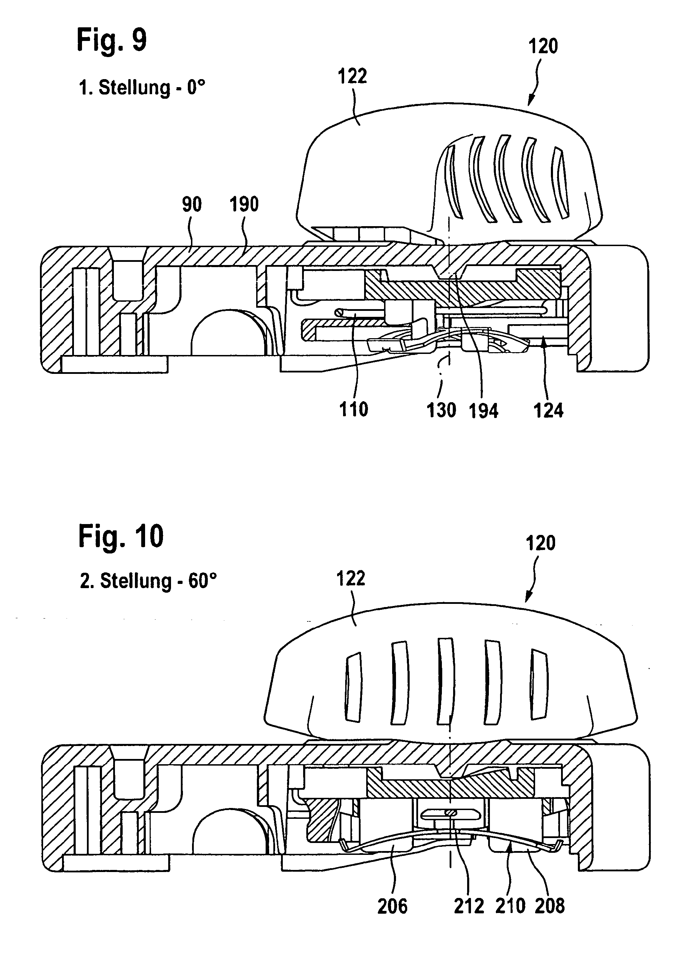

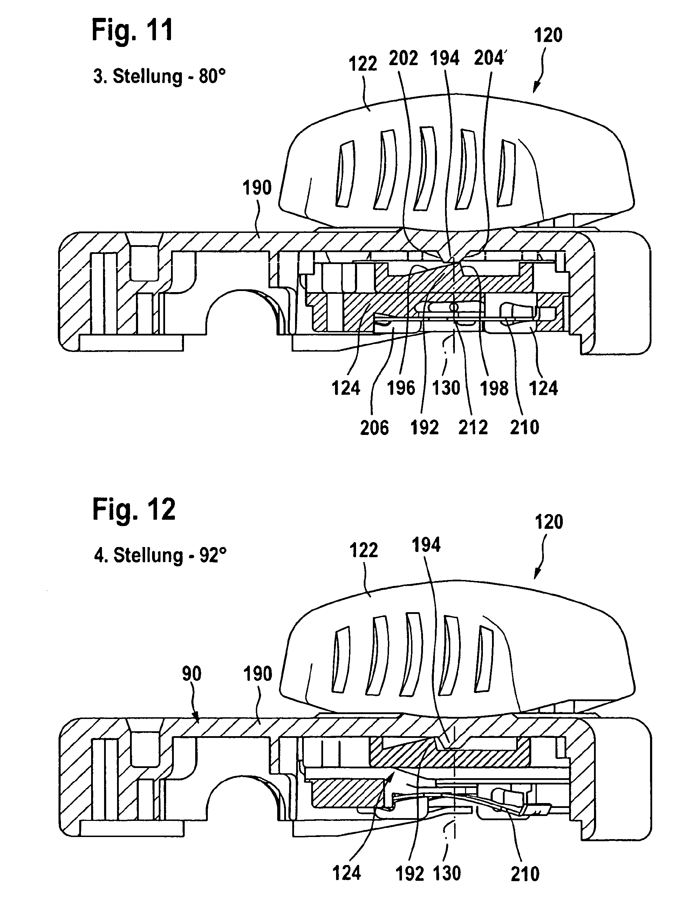

Wird nun das Betätigungselement 120 von der in Fig. 9 dargestellten Ausgangsstellung in die in Fig. 12 dargestellte Einzugsstellung gedreht, so laufen die Rastnasen 192 und 194 übereinander weg, wobei die Rastnase 194 vor Erreichen der Einzugsstellung über die Auflaufschräge 196 mit geringer Steigung läuft und somit nur ein geringes Drehmoment erforderlich ist, um zum Erreichen der Einzugsstellung die Rastnasen 192 und 194 übereinander weg zu bewegen.

In der Einzugsstellung verhindern somit die Rastnasen 192 und 194, dass das Betätigungselement 120 selbsttätig wieder sich in die Ausgangsstellung zurückdreht.

Die gegenüber der Auflaufschräge 196 wesentlich steilere Ablaufschräge 198 lässt sich nur durch über einen geringen Drehwinkel aktive Krafteinwirkung auf den Betätigungskopf 122 überwinden.

Damit die Rastnasen 192 und 194 übereinander weg laufen können, muss der Zugseilspannkörper 124 die Möglichkeit haben, sich in Richtung der Drehachse 130 zu bewegen.

Aus diesem Grund sind der Zugseilspannkörper 124 und der Betätigungskopf 122 als zwei getrennte Teile ausgebildet, wobei der Betätigungskopf 122 zwei Zapfen 206 und 208 aufweist, die entsprechende Ausnehmungen im Zugseilspannkörper 124 durchsetzen und an welchen eine Blattfeder 210 festlegbar ist, welche mit einem zwischen den Zapfen 206 und 208 liegenden Mittelbereich 212 den Zugseilspannkörper 124 in Richtung der Wand 190 beaufschlagt, um diesem ein Ausweichen von der Wand 190 weg gegen die Kraftwirkung der Blattfeder 210 zuzulassen.

Die Drehmitnahme zwischen dem Betätigungskopf 122 und dem Zugseilspannkörper 124 erfolgt dabei über die Zapfen 206 und 208, während durch die Blattfeder 210 der Zugseilspannkörper 124 die Möglichkeit hat, sich von der Wand 190 des Gehäuses weg zu bewegen, insbesondere dann, wenn die Rastnasen 192 und 194 übereinander hinweglaufen sollen, wie in Fig. 11 dargestellt.

In diesem Fall wird die Blattfeder 210 in dem mittigen Bereich 212 zwischen den Zapfen 206 und 208 in Richtung der Drehachse 130 von der Wand 190 weg gebogen, so dass dadurch auch der Zugseilspannkörper 124 sich von der Wand 190 wegbewegen kann, um mit der Rastnase 192 über die Rastnase 194 an der Wand 190 hinweglaufen zu können, bis die Einzugsstellung, dargestellt in Fig. 12, erreicht ist, in welcher der Zugseilspannkörper 124 aufgrund der Wirkung der Blattfeder 210 wieder in Richtung der Wand 190 des Gehäuses 90 soweit verschoben ist, dass die Rastnasen 192 und 194 einander hintergreifend aneinander anliegen.

Beispielsweise ist es durch ein manuelles Aufbringen eines Drehmoments auf den Betätigungskopf 122 in Richtung der Ausgangsstellung möglich, erneut den Zugseilspannkörper 124 in Richtung von der Wand 190 weg zu bewegen, um wieder die Rastnase 192 über die Rastnase 194 hinweg bewegen zu können, so dass die Verrastung in der Einzugsstellung gelöst wird und dann insbesondere aufgrund der Kraft der auf die Kulissenantriebselemente 144 wirkenden Schenkelfedern 164 über das Zugseil 110 eine selbsttätige Drehbewegung des Betätigungselements 120 dergestalt erfolgt, dass dieses in die Ausgangsstellung zurückdrehen kann.

Alternativ dazu ist es möglich, auf den Zugseilspannkörper 124 der einen Fixiereinrichtung 62 ein Drehmoment in Richtung der Ausgangsstellung indirekt dadurch wirken zu lassen, dass eine Betätigung des Betätigungskopfes 122 der jeweils anderen Fixiereinrichtung 62 erfolgt, so dass eine zusätzliche Spannung auf das Zugseil 110 aufgebracht wird, welche bei geeigneter Ausbildung der Rastnasen 192 und 194 ausreichend ist, um den Zugseilspannkörper 124 der einen Fixiereinrichtung 62 in Richtung der Ausgangsstellung so weit zu bewegen, dass die Rastnasen 192 und 194 nicht mehr zusammenwirken.

Bei einer Variante des zweiten Ausführungsbeispiels ist es denkbar, die Rastelemente 192 und 194 nicht so anzuordnen, dass einer der Zugseilspannkörper 124 erst in der Einzugstellung verrastet wird, wie in Fig. 12 dargestellt, sondern die Rastnasen 192 und 194 so anzuordnen, dass diese in einer Zwischenstellung verrasten, so dass beide Zugseilspannkörper 124 in die Zwischenstellung zu bewegen und in dieser durch die Rastnasen 192 und 194 zu verrasten sind, um zu erreichen, dass beide Riegelbolzen 140 in ihre unwirksame Stellung in das Gehäuse 90 eingefahren werden.

Nach einem derartigen sogenannten beidseitigen Betätigen beider Betätigungsköpfe122, um die Zugseilspannkörper 124 mit den Rastnasen 192, 194 von jeder der Fixiereinrichtungen 62a, b in der Zwischenstellung zu verrasten, besteht die Möglichkeit eines Lösens dadurch, dass durch Betätigen des Betätigungskopfes der einen Fixiereinrichtung 62a, b die Rastnasen 192, 194 der anderen Fixiereinrichtung 62b, a außer Eingriff kommen und der Zugseilspannkörper 124 sich wieder in Richtung seiner Ausgangsstellung bewegt, so dass dann auch durch manuelles Zurückdrehen des Betätigungskopfes 122 der einen Fixiereinrichtung 62a, b und Überwinden der Verrastung durch die Rastnasen 192 und 194 in der Zwischenstellung wieder beide Riegelbolzen 140 in ihre wirksame Stellung überführbar sind.

Im Übrigen sind bei dem zweiten Ausführungsbeispiel all diejenigen Elemente, die mit denen des ersten Ausführungsbeispiels identisch sind, mit denselben Bezugszeichen versehen, so dass hinsichtlich der Beschreibung derselben vollinhaltlich auf die Ausführungen zum ersten Ausführungsbeispiel verwiesen wird.

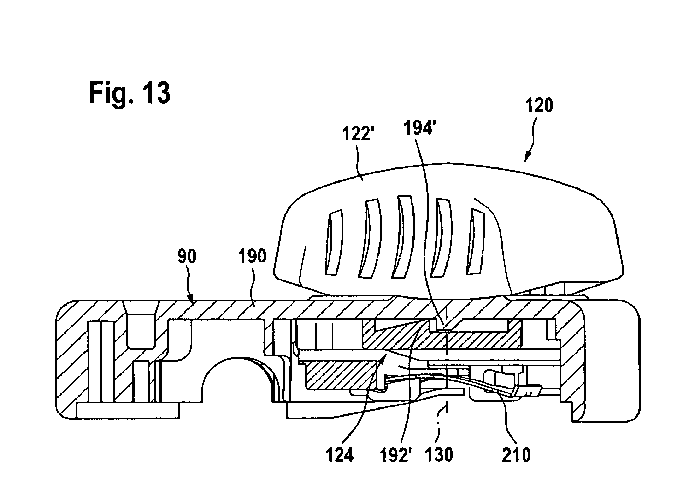

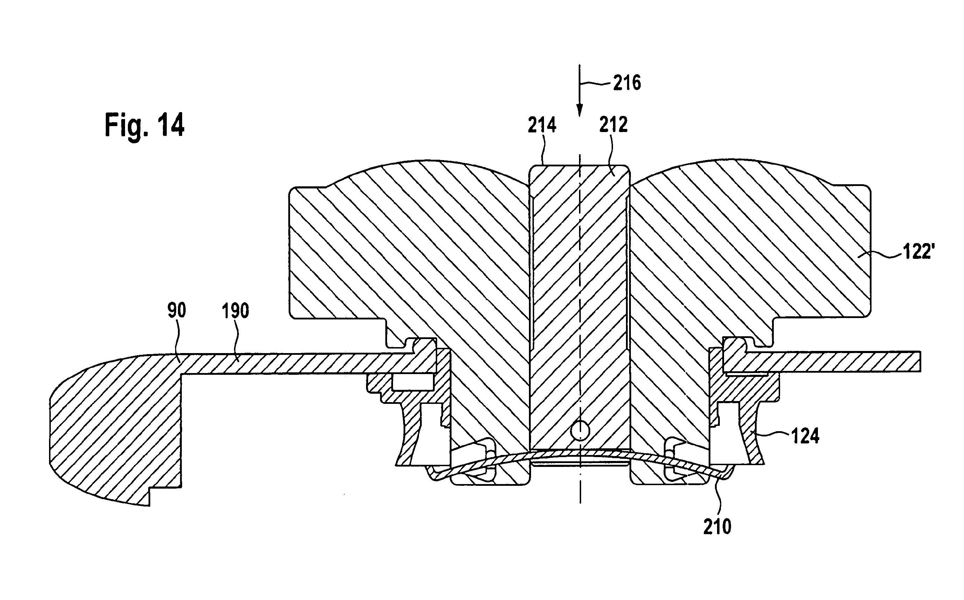

Bei einem dritten Ausführungsbeispiel, dargestellt in Fig. 13 und 14, sind die Rastnasen 192' und 194' mit steilen Flanken oder Schrägen versehen, so dass ein manuelles Aufbringen eines Drehmoments auf den Betätigungskopf 122 in Richtung der Ausgangsstellung nicht erlaubt, die Rastnase 192' über die Rastnase 194' hinwegzubewegen.

Aus diesem Grund ist, wie in Fig. 14 dargestellt, der Zugseilspannkörper 124' mit einem mittig im Betätigungskopf 122' geführten Betätigungsstift 212 verbunden, auf welchen die Blattfeder 210 wirkt und bei dessen Beaufschlagung an seiner Stirnseite 214 in Richtung 216 der Zugseilspannkörper 124 in Richtung von der Wand 190 weg bewegbar ist, so dass in dieser Stellung die Rastnase 192' über die Rastnase 194' hinwegbewegbar und die Verrastung in der Einzugstellung lösbar ist.

Im Übrigen sind bei dem dritten Ausführungsbeispiel all diejenigen Elemente, die mit denen des ersten und zweiten Ausführungsbeispiels identisch sind, mit denselben Bezugszeichen versehen, so dass hinsichtlich der Beschreibung derselben vollinhaltlich auf die Ausführungen zu diesen Ausführungsbeispielen Bezug genommen wird.

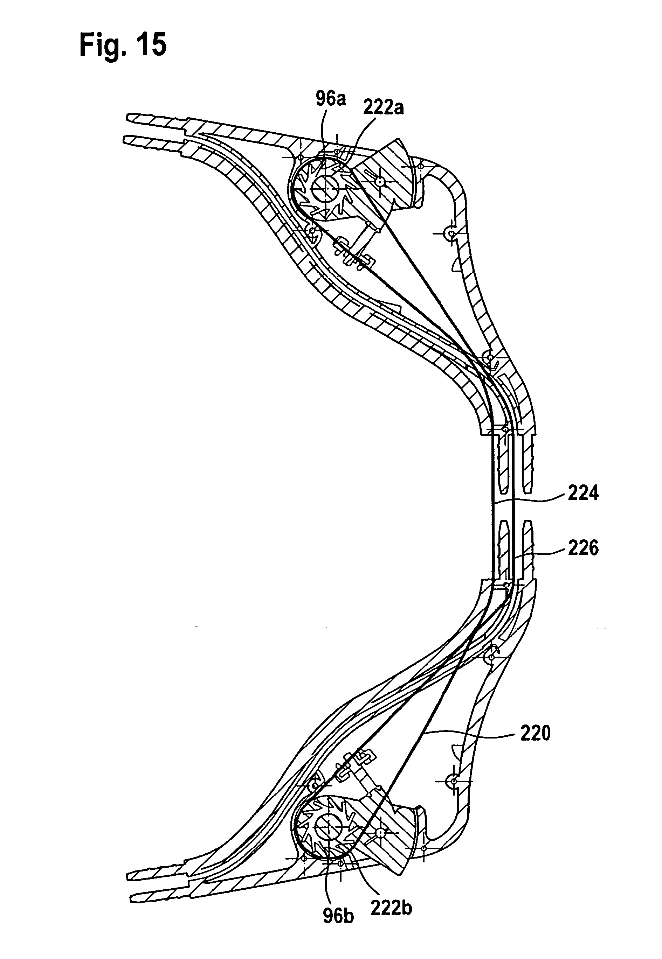

Bei einem vierten Ausführungsbeispiel, dargestellt in Fig. 15, ist ein geschlossen umlaufendes Zugseil 220 vorgesehen, welches um eine Seilführung 222a, b der jeweiligen Schwenkriegel 96a, b geführt ist und somit in der Lage ist, beide Schwenkriegel 96a, b hinsichtlich ihrer Drehbewegung zu koppeln. Dabei ist das Zugseil 220 mit sich kreuzenden Mittelstücken 224 und 226, die zwischen den Seilführungen 222a, b verlaufen, so ausgebildet, dass jeweils der andere Schwenkriegel 96a, b eine Schwenkbewegung in dieselbe wirksame oder unwirksame Stellung ausführt wie der eine Schwenkriegel 96b, a.

Ferner ist bei diesem Ausführungsbeispiel vorzugsweise vorgesehen, dass die Schwenkriegel 96a, b unmittelbar betätigbar sind, beispielsweise ebenfalls als Betätigungselement einen zeichnerisch in Fig. 15 nicht dargestellten Betätigungskopf aufweisen, welcher über das jeweilige Gehäuse 90 auf einer Oberseite überstehend angeordnet ist.

In diesem Fall besteht somit die Möglichkeit, unmittelbar mit dem Betätigungskopf einen der Schwenkriegel 96a, b von der unwirksamen in die wirksame Stellung oder von der wirksamen in die unwirksame Stellung zu verschwenken und somit gleichzeitig das entsprechende Schwenken des anderen Schwenkriegels 96b, a zu erreichen.

Im Übrigen sind diejenigen Elemente, die mit denen des ersten Ausführungsbeispiels identisch sind, mit denselben Bezugszeichen versehen, so dass hinsichtlich der Beschreibung vollinhaltlich auf die Ausführungen zum ersten Ausführungsbeispiel verwiesen wird.

## Patentansprüche

1. Windstoppeinrichtung für Cabriofahrzeuge, umfassend ein gegen Luftzug und/oder Strahlung schützendes Windschott(40), wobei das Windschott (40) für die Montage an einer Kraftfahrzeugkarosserie (14), zwei auf einander gegenüberliegenden Seiten angeordnete Fixiereinrichtungen (62) aufweist, in weichen mindestens ein zwischen einer wirksamen Stellung und einer unwirksamen Stellung hin- und herbewegbares Verriegelungselement (100, 140) gelagert ist,
**dadurch gekennzeichnet, dass** die Fixiereinrichtungen (62) durch eine Koppeleinrichtung (110, 220) derart gekoppelt sind, dass das mindestens eine Verriegelungselement (100, 140) der einen Fixiereinrichtung (62) und das mindestens eine Verriegelungselement (100, 140) der anderen gegenüberliegenden Fixiereinrichtung gemeinsam von der wirksamen in die unwirksame Stellung überführbar sind, dass jeder der Fixiereinrichtungen (62) ein Betätigungselement (120) zugeordnet ist, und dass die zwei Fixiereinrichtungen (62) durch Betätigen eines der Betätigungselemente (120) in die unwirksame Stellung überführbar sind.

2. Windstoppeinrichtung nach Anspruch 1, **dadurch gekennzeichnet, dass** durch die Koppeleinrichtung (220) beide Verriegelungselemente (100, 140) aktiv von ihrer wirksamen Stellung in ihre unwirksame Stellung und aktiv von ihrer unwirksamen Stellung in ihre wirksame Stellung überführbar sind.

3. Windstoppeinrichtung nach Anspruch 1, **dadurch gekennzeichnet, dass** die Koppeleinrichtung (110) so ausgebildet ist, dass in dieser eine aktive Einwirkung auf beide Verriegelungselemente (100, 140) nur beim Überführen derselben von der wirksamen Stellung in die unwirksame Stellung möglich ist.

4. Windstoppeinrichtung nach einem der voranstehenden Ansprüche,
**dadurch gekennzeichnet, dass** die Koppeleinrichtung (110, 220) ein mechanisches Koppelelement (110) umfasst.

5. Windstoppeinrichtung nach Anspruch 4, **dadurch gekennzeichnet, dass** das Koppelelement ein Zugelement (110, 220) ist.

6. Windstoppeinrichtung nach Anspruch 5, **dadurch gekennzeichnet, dass** das Zugelement ein Zugseil (110, 220) ist.

7. Windstoppeinrichtung nach einem der voranstehenden Ansprüche,
**dadurch gekennzeichnet, dass** das jeweilige Betätigungselement (120) nahe des jeweiligen Verriegelungselements (100, 140) angeordnet ist.

8. Windstoppeinrichtung nach einem der voranstehenden Ansprüche,
**dadurch gekennzeichnet, dass** das Betätigungselement (120) auf die Koppeleinrichtung (110) wirkt.

9. Windstoppeinrichtung nach Anspruch 8, **dadurch gekennzeichnet, dass** das Betätigungselement (120) auf ein Zugelement (110) der Koppeleinrichtung wirkt.

10. Windstoppeinrichtung nach einem der voranstehenden Ansprüche,
**dadurch gekennzeichnet, dass** das Betätigungselement (120) auf das Zugelement (110, 220) im Sinne einer Translation von mit den jeweiligen Verriegelungselementen (100, 140) zusammenwirkenden Bereichen auf das Koppelelement (110) wirkt.

11. Windstoppeinrichtung nach Anspruch 10, **dadurch gekennzeichnet, dass** das Betätigungselement (120) in einem Abschnitt (132) des Zugelements (110) im Sinne einer Variation einer Umschlingungsschleife auf das Zugelement (110) wirkt.

12. Windstoppeinrichtung nach einem der voranstehenden Ansprüche,
**dadurch gekennzeichnet, dass** das Betätigungselement (120) in einer eine unwirksame Stellung der Verriegelungselemente (100, 140) aufrechterhaltenden Stellung festlegbar ist.

13. Windstoppeinrichtung nach Anspruch 12, **dadurch gekennzeichnet, dass** das Betätigungselement (120) ein Rastelement (192) aufweist, welches mit einem stationären Rastelement (194) verrastbar ist.

14. Windstoppeinrichtung nach einem der voranstehenden Ansprüche,
**dadurch gekennzeichnet, dass** die Verriegelungselemente (100, 140) durch einen elastischen Kraftspeicher (104, 164) in Richtung ihrer wirksamen Stellung beaufschlagt sind.

15. Windstoppeinrichtung nach Anspruch 14, **dadurch gekennzeichnet, dass** jedem der Verriegelungselemente (100, 140) ein eigener elastischer Kraftspeicher (104, 164) zugeordnet ist.

16. Windstoppeinrichtung nach einem der voranstehenden Ansprüche,
**dadurch gekennzeichnet, dass** zwischen dem jeweiligen Verriegelungselement (140) und dem diesem zugeordneten Betätigungselement (120) eine unterschiedliche Bewegungsabläufe der auf gegenüberliegenden Seiten der Schutzeinrichtung angeordneten Verriegelungselemente (140) bewirkende Bewegungsablaufkopplung (170) vorgesehen ist.

17. Windstoppeinrichtung nach Anspruch 16, **dadurch gekennzeichnet, dass** die Bewegungsablaufkopplung (170) so ausgebildet ist, dass beim Einwirken auf ein Betätigungselement (120) im Sinne eines Übergangs der Verriegelungselemente (140) von der unwirksamen Stellung in die wirksame Stellung zunächst das Verriegelungselement (140) der gegenüberliegenden Fixiereinrichtung (62) in die wirksame Stellung übergeht und dann mit Verzögerung das diesem Betätigungselement (120) zugeordnete Verriegelungselement (140).

18. Windstoppeinrichtung nach Anspruch 16 oder 17, **dadurch gekennzeichnet, dass** die Bewegungsablaufkopplung (170) als Sperreinrichtung ausgebildet ist, welche zunächst einen Übergang des dem Betätigungselement (120) zugeordneten Verriegelungselements (140) von der unwirksamen Stellung in die wirksame Stellung sperrt und erst dann freigibt, wenn das Betätigungselement (120) aufgrund seiner Stellung zugelassen hat, dass das andere Verriegelungselement (140) in die wirksame Stellung übergegangen ist.

19. Windstoppeinrichtung nach einem der voranstehenden Ansprüche,
**dadurch gekennzeichnet, dass** die Windstoppeinrichtung (10) eine Abdeckung (50) und das mit dieser verbundenes Windschott (40) aufweist.

## Claims

1. Wind protection arrangement for convertible vehicles, comprising a wind bulkhead (40) protecting against draught and/or radiation, wherein the wind bulkhead (40) has two fastening means (62) arranged on opposite sides for assembly on a vehicle body (14), in which fastening means at least one locking element (100, 140) is disposed, which is movable back and forth between an active position and an inactive position, **characterised in that** the fastening means (62) are coupled by a coupling means (110, 220) in such a manner that the at least one locking element (100, 140) of one fastening means (62) and the at least one locking element (100, 140) of the other opposite fastening means can be moved jointly from the active position into the inactive position, that each of the fastening means (62) has an associated operating element (120), and that the two fastening means (62) can be moved into the inactive position by operating one of the operating elements (120).

2. Wind protection arrangement according to claim 1, **characterised in that** both locking elements (100, 140) can be moved by the coupling means (220) actively from their active position into their inactive position and actively from their inactive position into their active position.

3. Wind protection arrangement according to claim 1, **characterised in that** the coupling means (110) is configured so that an active effect on both locking elements (100, 140) is possible therein only when these are moved from the active position into the inactive position.

4. Wind protection arrangement according to one of the preceding claims, **characterised in that** the coupling means (110, 220) comprises a mechanical coupling element (110).

5. Wind protection arrangement according to claim 4, **characterised in that** the coupling element is a pull element (110, 220).

6. Wind protection arrangement according to claim 5, **characterised in that** the pull element is a pull cord (110, 220).

7. Wind protection arrangement according to one of the preceding claims, **characterised in that** the respective operating element (120) is arranged close to the respective locking element (110, 140).

8. Wind protection arrangement according to one of the preceding claims, **characterised in that** the operating element (120) acts on the coupling means (110).

9. Wind protection arrangement according to claim 8, **characterised in that** the operating element (120) acts on a pull element (110) of the coupling means.

10. Wind protection arrangement according to one of the preceding claims, **characterised in that** the operating element (120) acts on the pull element (110, 220) in the sense of a translatory movement from regions cooperating with the respective locking elements (100, 140) onto the coupling element (110).

11. Wind protection arrangement according to claim 10, **characterised in that** the operating element (120) acts on the pull element (110) in a section (132) of the pull element (110) in the sense of a variation of a wraparound loop.

12. Wind protection arrangement according to one of the preceding claims, **characterised in that** the operating element (120) can be fixed in a position maintaining an inactive position of the locking elements (100, 140).

13. Wind protection arrangement according to claim 12, **characterised in that** the operating element (120) has a catch element (192), which can lock with a stationary catch element (194).

14. Wind protection arrangement according to one of the preceding claims, **characterised in that** an elastic energy storage means (104, 164) acts on the locking elements (100, 140) in the direction of their active position.

15. Wind protection arrangement according to claim 14, **characterised in that** each of the locking elements (100, 140) has its own associated elastic energy storage means (104, 164).

16. Wind protection arrangement according to one of the preceding claims, **characterised in that** a movement sequence coupling (170) effecting different movement sequences of the locking elements (140) arranged on opposite sides of the protection arrangement is provided between the respective locking element (140) and the operating element (130) associated therewith.

17. Wind protection arrangement according to claim 16, **characterised in that** the movement sequence coupling (170) is configured so that when acting on an operating element (120) in the sense of a movement of the locking elements (140) from the inactive position into the active position, the locking element (140) of the opposite fastening means (62) firstly moves into the active position and then with delay the locking element (140) associated with this operating element (120).

18. Wind protection arrangement according to claim 16 or 17, **characterised in that** the movement sequence coupling (170) is configured as a blocking means, which firstly blocks a movement of the locking element (140) associated with the operating element (120) from the inactive position into the active position and only releases this when the operating element (120), by virtue of its position, has allowed the other locking element (140) to be moved into the active position.

19. Wind protection arrangement according to one of the preceding claims, **characterised in that** the wind protection arrangement (10) comprises a cover (50) and the wind bulkhead (40) connected thereto.

## Revendications

1. Dispositif coupe-vent pour véhicules décapotables, comprenant un coupe-vent (40) protégeant contre les courants d'air et/ou le rayonnement, dans lequel le coupe-vent (40) présente pour le montage sur une carrosserie de véhicule automobile (14) deux systèmes de fixation (62) disposés sur des côtés opposés l'un à l'autre, dans lesquels est monté au moins un élément de verrouillage (100, 140) mobile alternativement entre une position active et une position inactive, **caractérisé en ce que** les systèmes de fixation (62) sont couplés par un dispositif de couplage (110, 220) de telle sorte que ledit au moins un élément de verrouillage (100, 140) dudit un système de fixation (62) et ledit au moins un élément de verrouillage (100, 140) de l'autre système de fixation opposé peuvent être transférés ensemble de la position active à la position inactive, **en ce que** chacun des systèmes de fixation (62) se voit attribuer un élément d'actionnement (120), et **en ce que** les deux systèmes de fixation (62) peuvent être transférés vers la position inactive par l'actionnement d'un des éléments d'actionnement (120).

2. Dispositif coupe-vent selon la revendication 1, **caractérisé en ce que** le dispositif de couplage (220) permet de transférer les deux éléments de verrouillage (100, 140) activement de leur position active à leur position inactive et activement de leur position inactive à leur position active.

3. Dispositif coupe-vent selon la revendication 1, **caractérisé en ce que** le dispositif de couplage (110) est réalisé de telle sorte qu'à l'intérieur de celui-ci, un effet actif sur les deux éléments de verrouillage (100, 140) est possible uniquement lorsqu'ils sont transférés de la position active à la position inactive.

4. Dispositif coupe-vent selon l'une quelconque des revendications précédentes, **caractérisé en ce que** le dispositif de couplage (110, 220) comprend un élément de couplage mécanique (110).

5. Dispositif coupe-vent selon la revendication 4, **caractérisé en ce que** l'élément de couplage est un élément de traction (110, 220).

6. Dispositif coupe-vent selon la revendication 5, **caractérisé en ce que** l'élément de traction est un câble tracteur (110, 220).

7. Dispositif coupe-vent selon l'une quelconque des revendications précédentes, **caractérisé en ce que** l'élément d'actionnement respectif (120) est disposé près de l'élément de verrouillage respectif (100, 140).

8. Dispositif coupe-vent selon l'une quelconque des revendications précédentes, **caractérisé en ce que** l'élément d'actionnement (120) agit sur le dispositif de couplage (110).

9. Dispositif coupe-vent selon la revendication 8, **caractérisé en ce que** l'élément d'actionnement (120) agit sur un élément de traction (110) du dispositif de couplage.

10. Dispositif coupe-vent selon l'une quelconque des revendications précédentes, **caractérisé en ce que** l'élément d'actionnement (120) agit sur l'élément de traction (110, 220) en termes de translation de zones coopérant avec les éléments de verrouillage (100, 140) respectifs sur l'élément de couplage (110).

11. Dispositif coupe-vent selon la revendication 10, **caractérisé en ce que** l'élément d'actionnement (120) agit sur l'élément de traction (110) dans une portion (132) de l'élément de traction (110) en termes de variation d'une boucle d'enroulement.

12. Dispositif coupe-vent selon l'une quelconque des revendications précédentes, **caractérisé en ce que** l'élément d'actionnement (120) peut être fixé dans une position maintenant une position inactive des éléments de verrouillage (100, 140).

13. Dispositif coupe-vent selon la revendication 12, **caractérisé en ce que** l'élément d'actionnement (120) présente un élément d'enclenchement (192) qui peut s'enclencher dans un élément d'enclenchement stationnaire (194).

14. Dispositif coupe-vent selon l'une quelconque des revendications précédentes, **caractérisé en ce que** les éléments de verrouillage (100, 140) sont sollicités par un accumulateur d'énergie élastique (104, 164) en direction de leur position active.

15. Dispositif coupe-vent selon la revendication 14, **caractérisé en ce que** chacun des éléments de verrouillage (100, 140) se voit attribuer son propre accumulateur d'énergie élastique (104, 164).

16. Dispositif coupe-vent selon l'une quelconque des revendications précédentes, **caractérisé en ce qu'**entre l'élément de verrouillage respectif (140) et l'élément d'actionnement (120) qui lui est attribué, un couplage de séquence de mouvements (170) provoquant différentes séquences de mouvements des éléments de verrouillage (140) disposés sur des côtés opposés du dispositif de protection.

17. Dispositif coupe-vent selon la revendication 16, **caractérisé en ce que** le couplage de séquence de mouvements (170) est réalisé de telle sorte qu'en cas d'effet sur un élément d'actionnement (120) en termes de transition des éléments de verrouillage (140) de la position inactive à la position active, d'abord l'élément de verrouillage (140) du dispositif de fixation opposé (62) passe à la position active, et ensuite avec un retard, l'élément de verrouillage (140) attribué à cet élément d'actionnement (120).

18. Dispositif coupe-vent selon la revendication 16 ou 17, **caractérisé en ce que** le couplage de séquence de mouvements (170) est réalisé comme un dispositif de blocage qui bloque d'abord une transition de l'élément de verrouillage (140) attribué à l'élément d'actionnement (120) de la position inactive à la position active, et la libère seulement quand l'élément d'actionnement (120) a permis par sa position à l'autre élément de verrouillage (140) de passer à la position active.

19. Dispositif coupe-vent selon l'une quelconque des revendications précédentes, **caractérisé en ce que** le dispositif coupe-vent (10) présente un recouvrement (50) et le coupe-vent (40) relié à celui-ci.
